# NEUE EUROPÄISCHE PATENTSCHRIFT

(11) **EP 0 294 730 B2**
(45) Veröffentlichungstag und Bekanntmachung des Hinweises auf die Entscheidung über den Einspruch: **09.04.1997**
(45) Hinweis auf die Patenterteilung: 02.01.1992
(21) Anmeldenummer: 88108969.2
(22) Anmeldetag: 04.06.1988
(51) Int. Cl.: F24F 3/00, F24F 12/00

(54) **Raumlufttechnisches Gerät**
Ventilation device
Dispositif aéraulique

(30) Priorität: 08.06.1987 DE 3719392
(43) Veröffentlichungstag der Anmeldung: 14.12.1988
(73) Patentinhaber: HANSA VENTILATOREN UND MASCHINENBAU NEUMANN GMBH & CO. KG, D-26677 Saterland (DE)
(72) Erfinder: Stellamans, Manfred, D-2953 Rhauderfehn (DE)
(74) Vertreter: Ninnemann, Detlef, Dipl.-Ing.

(56) Entgegenhaltungen:
- DE-A- 3 027 447
- DE-A- 3 315 444
- DE-A- 3 405 584
- DE-B- 2 358 884
- DE-B- 2 627 734
- FR-A- 2 196 452
- FR-A- 2 402 163
- US-A- 4 142 575
- CONFERENCE PROCEEDINGS OF THE 21ST INTERSOCIETY ENERGY CONVERSION ENGINEERING, San Diego, US, 25.-29. August 1986, Band 2, Seiten 1220-1225; C.M. SCOFIELD et al.: "The Heat Pipe: Its Use in Dry Evaporative Cooling"
- Firmenprospekt Weiss Technik GmbH: WÄRMEPUMPEN-KLIMAGERÄT, Typ BIECO mit variablem Aussenluftanteil
- Firmenprospekt Weiss Technik GmbH: STALL-KLIMAGERÄTE nach dem Wärmepumpenprinzip

## Beschreibung

Die Erfindung bezieht sich auf ein raumlufttechnisches Gerät mit einem Gehäuse, in dem unabhängig voneinander antreibbare Zuluftventilatoren und Fortluftventilatoren für getrennte Zuluft- und Fortluftströme, ein Kondensator, ein Verdampfer sowie wahlweise ein oder mehrere Filter und mehrere die Luftströme in Abhängigkeit von der Außenlufttemperatur und der gewünschten Raumlufttemperatur und -feuchtigkeit steuernde, auf der Saugseite der Ventilatoren angeordnete Klappensysteme vorgesehen sind, und das mindestens einen Außenluftanschluß, Fortluftanschluß, Rückluftanschluß und Zuluftanschluß aufweist, wobei die Klappensysteme so steuerbar sind, daß das raumlufttechnische Gerät im reinen Umluftbetrieb mit wahlweiser Zuschaltung des Verdampfers oder Kondensators im reinen Außenluftbetrieb oder in einem Mischbetrieb mit einer Mischung der Außen-und Rückluft betreibbar ist.

Aus der FR-A-2402163, die ein Gerät der obengenannten Art beschreibt, ist eine Wärmepumpe mit zwei in einem Gehäuse getrennt voneinander angeordneten Kammern bekannt. Die erste Kammer weist einen Verdampfer und einen in strömungsrichtung nachgeordneten Außenluftventilator sowie ein eingangsseitig vorgesehenes steuerbares Klappensystem auf und ist mit einem Außenluftanschluß verbunden. Die zweite Kammer enthält einen Kondensator mit in Strömungsrichtung nachgeordnetem Rückluftventilator sowie ein eingangsseitig angeordnetes steuerbares Klappensystem und ist mit einem Rückluftanschluß verbunden. Beide Kammern sind über ein Klappensystem mit jeweils einer Ausgangskammer verbunden, die mit einem Fortluftanschluß und einem Rückluftanschluß verbunden sind, so daß durch entsprechende Steuerung der Klappensysteme die Wärmepumpe im reinen Umluftbetrieb, im reinen Außenluftbetrieb oder in einem Mischbetrieb mit einer Mischung der Außen- und Rückluft betrieben werden kann.

Zur Steuerung der verschiedenen Funktionen in Abhängigkeit von der Außentemperatur der gewünschten Raumlufttemparatur und -feuchtigkeit werden die Klappensysteme so eingestellt, daß ein Teil der über den Außenluftanschluß zugeführten Außenluft dem Zuluftventilator bzw. ein Teil der über den Rückluftanschluß zugeführten Rückluft dem Fortluftventilator zu geführt wird. Liegt die Temperatur der Außenluft über der Temperatur der Zuluft, so wird der Außenluftanteil durch die Klappensysteme auf einen minimalen Wert gefahren, so daß im reinen Umluftbetrieb die Umluft durch den Verdampfer im raumlufttechnischen Gerät gekühlt und die Wärme über den luftgekühlten Kondensator an die Fortluft abgegeben wird.

In einem mittleren Temperaturbereich von beispielsweise 12° Celsius bis ca. 18°Celsius wird mittels der Klappensysteme ein Mischbetrieb eingestellt, bei dem die Wärme direkt über die Außenluft abgeführt wird. Eine Anhebung des Außenluftanteils von minimal bis 100% über die im raumlufttechnischen Gerät integrierten Klappensysteme erfolgte temperaturabhängig, wobei nur die Ventilatoren laufen.

Unterschreitet die Außenluft einen vorgegebenen Temperaturbetrag von beispielsweise 12°Celsius,so erfolgt die Kühlung der Umluft über ein eingebautes Wärmerohrregister verlustfrei. Ein solches Wärmerohrregister ist beispielsweise aus der DE-A-3 315 444 bekannt. Die Wärme wird an den Außenluft/ Fortluftströmungsweg abgegeben, wobei der Außenluftanteil auf minimal eingestellt ist. In diesem Betrieb wird der Fortluftventilator temperaturabhängig geschaltet.

Aufgabe der vorliegenden Erfindung ist es, ein raumlufttechnisches Gerät der vorstehend genannten Gattung zu schaffen, das eine Regelung des Rückluftmengenanteils bei der Zufuhr der Rückluft und Außenluft in den verschiedenen Betriebsarten ermöglicht und damit eine Verbesserung des Wirkungsgrades des raumlufttechnischen Gerätes sicherstellt.

Diese Aufgabe wird erfindungsgemäß durch Anspruch 1 gelöst.

Die erfindungsgemäße Lösung ermöglicht unterschiedliche Betriebsarten des raumlufttechnischen Gerätes Umluftbetrieb, Außenluftbetrieb und Mischbetrieb mit einer Regelung des dem Gerät zugeführten Rückluftanteils, so daß der Gesamtwirkungsgrad des raumlufttechnischen Gerätes verbessert und damit kompakte äußere Abmessungen erzielt werden.

Eine vorteilhafte Ausgestaltung des raumlufttechnischen Gerätes ist dadurch gekennzeichnet, daß ein zusätzliches, druckseitig angeordnetes Klappensystem vorgesehen ist, mit dem der Rückluftanteil des Fortluftstromes steuerbar ist.

Durch die Anordnung eines druckseitigen Klappensystems in einem zweiten Rückluftanschluß wird eine optimale Fortluftmengensteuerung ermöglicht, ohne daß der Betrieb des Fortluftventilators erforderlich ist, so daß bei Überschreiten eines vorgebbaren Raumluftdruckes ein Teil der Rückluft unmittelbar zum Fortluftanschluß geleitet wird, ohne daß die Strömungswiderstände der auf der Saugseite des Fortluftventilators angeordneten Bauteile wie beispielsweise Klappensysteme, Filter, Kondensatoren und dergleichen überwunden werden müssen.

Weitere vorteilhafte Ausgestaltungen der erfindungsgemäßen Lösung sind den Merkmalen der Ansprüche 3 und 4 zu entnehmen.

Ein Verfahren zum Betrieb des raumlufttechnischen Gerätes ist in den Ansprüchen 5 und 6 angegeben.

Diese Ausgestaltung der erfindungsgemäßen Lösung ermöglicht verschiedene Betriebsweisen des raumlufttechnischen Gerätes wie Umluftbetrieb, Außenluftbetrieb und Mischbetrieb bei kompakten äußeren Abmessungen des raumlufttechnischen Gerätes und der Gewährleistung ausgeglichener Druckverhältnisse im zu klimatisierenden Raum, ohne daß ein ständiger Betrieb des Fortluftventilators erforderlich ist.

Anhand eines in der Zeichnung dargestellten Ausführungsbeispieles soll der der Erfindung zugrunde liegende Gedanke näher erläutert werden. Es zeigen:
Figur 1 einen Längsschnitt durch ein raumlufttechnisches Gerät mit zwei hintereinander angeordneten luftansaugseitigen Kammern;
Figur 2 eine Draufsicht auf das raumlufttechnische Gerät gemäß Figur 1;
Figur 3 eine stirnseitige Ansicht des Geräts gemäß Figur 1;
Figuren 4 bis 7 eine schematische Darstellung der verschiedenen Strömungswege bei unterschiedlichen Betriebsarten des raumlufttechnischen Gerätes gemäß den Figuren 1 bis 3;
Figur 8 einen Längsschnitt durch ein erfindungsgemäßes raumlufttechnisches Gerät mit, ansaugseitig nebeneinander angeordneten Kammern;
Figur 9 eine Draufsicht auf das Gerät gemäß Figur 8 und
Figur 10 eine Stirnseitenansicht des Gerätes gemäß den Figuren 8 und 9.

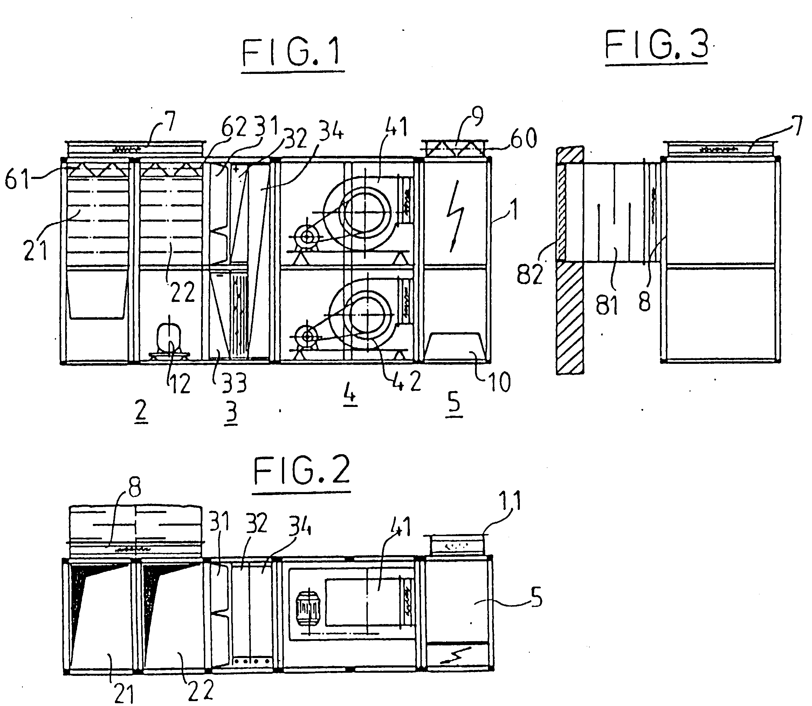

Figur 1 zeigt einen Längsschnitt durch ein raumlufttechnisches Gerät mit einem Gehäuse 1, das vier in Strömungsrichtung hintereinander angeordnete Module, nämlich ein Luftansaugmodul 2, ein Filter- und Klimamodul 3, ein Ventilatormodul 4 und ein Luftaustrittsmodul 5 enthält.

Das Luftansaugmodul 2 weist auf seiner Oberseite einen Rückluftanschluß 7 und an seiner Hinterseite einen Außenluftanschluß 8 auf, der gemäß Figur 3 über einen Außenluftkanal 81 mit einem beispielsweise ein Mauerwerk abschließenden Ansauggitter 82 verbunden ist. Das Luftansaugmodul 2 enthält zwei strömungsmäßig hintereinander angeordnete, parallele und gegenseitig abgeschottete Kammern 21, 22, die beide unmittelbar mit dem Außenluftanschluß 8 und über Mischklappensysteme 61, 62 mit dem Rückluftanschluß 7 verbunden sind. Auf diese Weise kann der Anteil der Rückluftmenge in den Kammern 21, 22 mit Hilfe der Mischklappensysteme 61, 62 gesteuert werden. Am Boden des Luftansaugmoduls 2 ist eine Luftbefeuchtungsvorrichtung 12 vorgesehen.

Das Filter- und Klimamodul 3 enthält einen oder mehrere Filter 31, einen Kondensator 32 im Strömungsweg der Außenluh/Rückluft zur Fortluft, einen Verdampfer 33 im Strömungsweg Rückluft/Außenluft zur Zuluft und ein über beide Strömungswege reichendes Wärmerohr 34.

Im Strömungsweg Rückluft/Außenluft zur Fortluft ist ein Fortluftventilator 41 im Ventilatormodul 4 vorgesehen, während im Strömungsweg Rückluft/Außenluft zur Zuluft ein Zuluftventilator 42 angeordnet ist, der im dargestellten Ausführungsbeispiel unterhalb des Fortluftventilators 41 vorgesehen ist.

Das Luftaustrittsmodul weist gemäß Figur 2 einen Fortluftanschluß 11 auf, während an seiner Oberseite ein zweiter Rückluftanschluß 9 vorgesehen ist, der ein zusätzliches Klappensystem 60 aufweist, über das eine Rückluft- bzw. Fortluftmengensteuerung zum Druckausgleich unabhängig vom Betrieb des Fortluftventilators erfolgt. Dabei kann das zusätzliche Klappensystem 60 so eingestellt werden, daß bei Überschreiten eines vorgebbaren Luftdruckes im zu klimatisierenden Raum das zusätzliche Klappensystem 60 öffnet und so einen steuerbaren Teil der Rückluft unmittelbar in den Fortluftanschluß 11 ableitet.

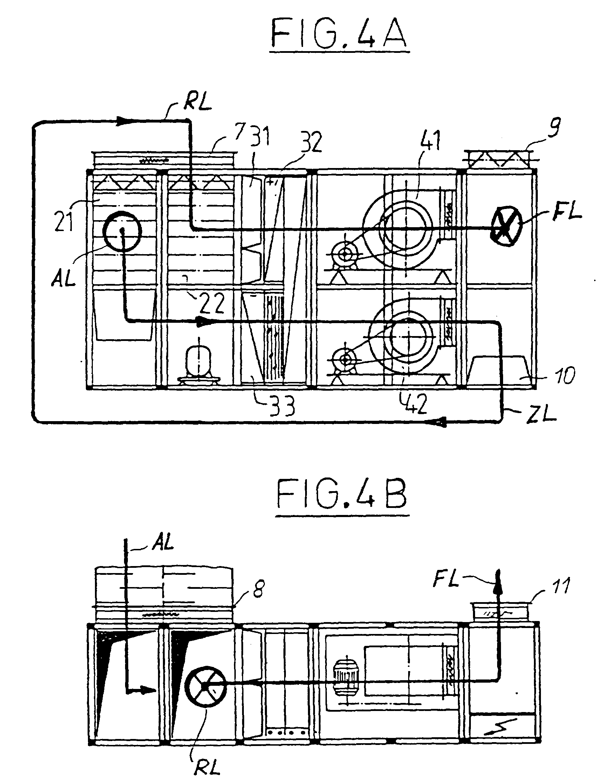

In den Figuren 4A und 4B ist in Seitenansicht bzw. Draufsicht ein reiner Außenluftbetrieb dargestellt, bei dem die Außenluft AL in die Kammer 21 eingesaugt und über den Verdampfer 33 geleitet sowie vom Zuluftventilator 42 an den Zuluftanschluß 10 abgegeben wird.

Die Rückluft wird über den Rückluftanschluß 7 in die zweite Kammer 22 angesaugt und über den Filter 31 zur Kühlung des Kondensators 32 verwendet bevor die Rückluft über den Fortluftventilator 41 an den Fortluftanschluß 11 abgegeben wird.

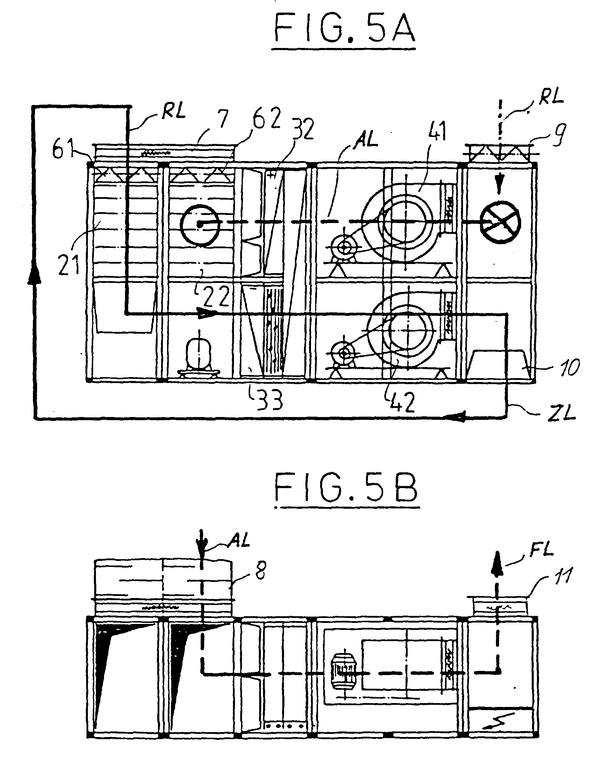

In den Figuren 5A und 5B ist in Seitenansicht bzw. Draufsicht ein reiner Umluftbetrieb unter Einbeziehung des Verdampfers 33 und des Kondensators 32 dargestellt. In dieser Betriebsweise wird die Rückluft RL über das erste Klappensystem 61 in die erste Kammer 21 eingesaugt, über den Verdampfer 33 geleitet und vom Zuluftventilator 42 an den Zuluftanschluß 10 abgegeben. Zum Kühlen des Kondensators 32 wird Außenluft AL bei geschlossenem zweiten Klappensystem 62 am Kondensator 32 vorbeigeleitet und über den Fortluftventilator 41 an den Fortluftanschluß 11 abgegeben. Bei Überschreiten eines bestimmten Raum luftdruckes wird zusätzlich Rückluft RL über den zweiten Rückluftanschluß 9 bei geöffnetem zusätzlichem Klappensystem 60 direkt an den Fortluftanschluß 11 abgegeben. Das Gleiche trifft bei stehendem Fortluftventilator 41 zu.

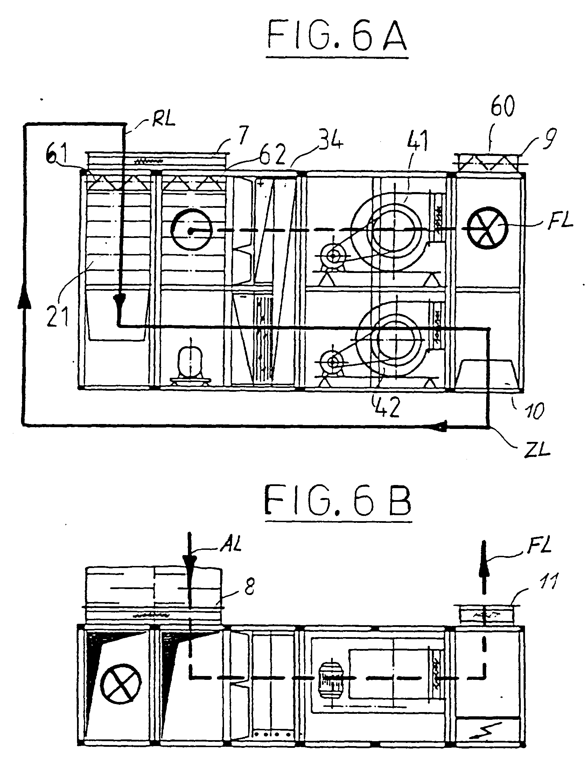

In den Figuren 6A und 6B ist ebenfalls ein reiner Umluftbetrieb dargestellt, bei dem eine indirekte Kühlung mit Hilfe des Wärmerohres 34 erfolgt. Auch in diesem Fall wird die Rückluft bei geöffnetem ersten Klappensystem 61 in die erste Kammer 21 eingesaugt, über das Wärmerohr 34 geleitet und vom Zuluftventilator 42 in den Zuluftanschluß 10 gedrückt. Die Außenluft wird bei geschlossenem zweiten Klappensystem 62 unmittelbar am Wärmerohr 34 vorbeigeleitet und über den Fortluftventilator 41 an den Fortluftanschluß 11 abgegeben. Auch in diesem Fall kann bei Überschreiten eines bestimmten Raumluftdruckes ein Teil der Rückluft RL über das dann geöffnete zusätzliche Klappensystem 60 und den zusätzlichen Rückluftanschluß 9 an den Fortluftanschluß 11 abgegeben werden.

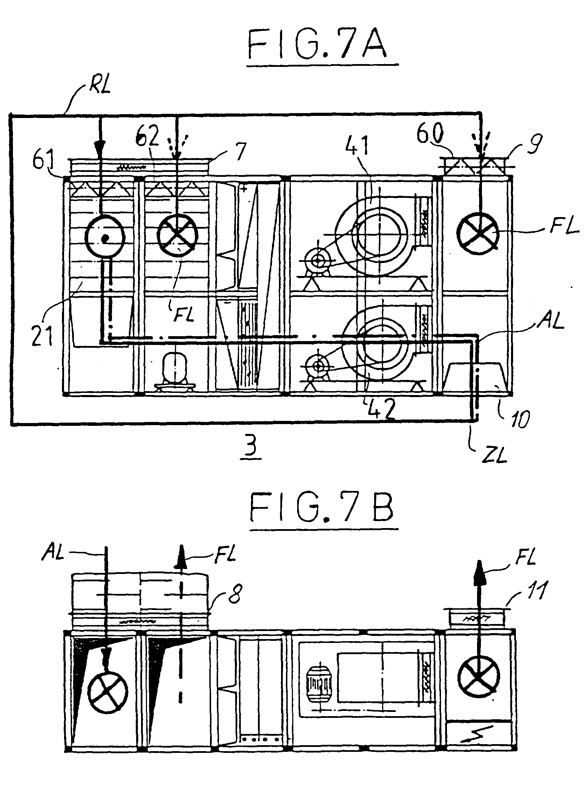

In den Figuren 7A und 7B ist ein Mischbetreib dargestellt, bei dem Rückluft RL und Außenluft AL der ersten Kammer 21 zugeführt werden und im von der Stellung des ersten Klappensystems 61 abhängigen Verhältnis miteinander vermischt und über das Filter- und Klimamodul 3 zum Zuluftventilator 42 geleitet wird, von wo aus das Luftgemisch an den Zuluftanschluß 10 abgegeben wird. Bei Überschreiten eines bestimmten Raumluftdruckes wird die Rückluft RL über den zusätzlichen Rückluftanschluß 9 und das zusätzliche Klappensystem 60 an den Fortluftanschluß 11 bei stehendem Fortluftventilator 41 abgegeben bzw. zusätzlich über das zweite Klappensystem 62 und den Rückluftanschluß 9 unmittelbar über den Außenluftanschluß an die Außenluft AL abgegeben, wenn beispielsweise durch räumlich entfernte Anbringung der einzelnen Außenluftkanäle ein ausreichender Abstand zwischen den Außenluftanschlüssen sichergestellt ist.

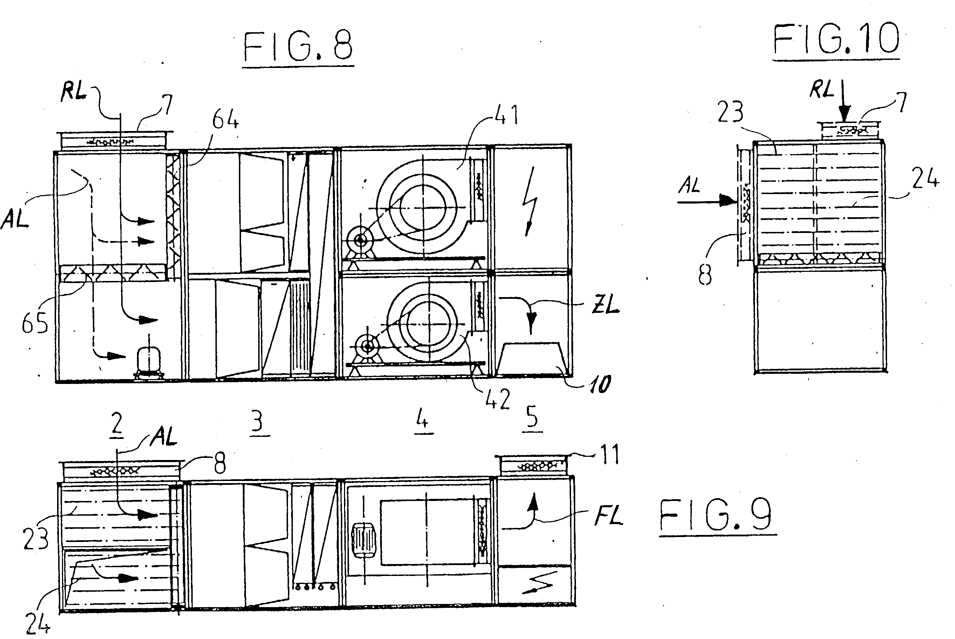

In den Figuren 8 bis 10 ist in Seitenansicht, Draufsicht und Stirnseitenansicht ein erfindungsgemäßes raumlufttechnisches Gerät dargestellt, wobei die Kammern des Luftansaugmoduls strömungsmäßig nebeneinander angeordnet und mittels zweier Klappensysteme 64, 65 abgeschlossen sind. Auf diese Weise können ebenfalls zwei Außenluft- und Rückluftströme gebildet werden, die analog zu den vorstehend beschriebenen Betriebszuständen gesteuert werden können.

Der Rückluftanschluß 7 ist an der Oberseite einer zweiten Kammer 24 angeordnet, während der Außenluftanschluß 8 zu einer ersten Kammer 23 führt. Durch unterschiedliche Stellung der Klappensysteme 64, 65 kann eine beliebige Mischung der Außenluft AL und der Rückluft RL im Wege des Zuluftstromes bzw. des Fortluftstromes erfolgen. Dies ist in Figur 8 und 9 durch die ausgezogene bzw. gestrichelt dargestellten Linien näher bezeichnet worden.

Im übrigen entsprechen die in den Figuren 8 bis 10 eingetragenen Bezugszeichen den der Figuren 1 bis 3 und bezeichnen gleiche Bauteile.

Insgesamt wurde vorstehend ein raumlufttechnisches Gerät beschrieben, das durch die Anordnung von jeweils zwei Außenluft- und Rückluftanschlüssen sowie durch zusätzliche Anordnung eines druckseitigen Klappensystems die Möglichkeit bietet, einen Raum mit konditionierter Luft zu versehen, ein kompaktes Raumluftsystem mit allen darin integrierten Bauteilen aufzubauen und für ausgeglichene Druckverhältnisse zu sorgen. Gleichzeitig besteht die Möglichkeit zur indirekten Kälterückführung mit Hilfe eines Wärmerohres bei kompakten Abmessungen für eine verkürzte Bauweise des raumlufttechnischen Gerätes.

## Patentansprüche

1. Raumlufttechnisches Gerät mit einem Gehäuse (1), in dem unabhängig voneinander antreibbare Zuluftventilatoren (42) und Fortluftventilatoren (41) für getrennte Zuluftund Fortluftströme, ein Kondensator (32), ein Verdampfer (33) und/oder ein Wärmerohr (34) sowie wahlweise ein oder mehrere Filter (31) und mehrere die Luftströme in Abhängigkeit von der Außenlufttemperatur und der gewünschten Raumlufttemperatur und -feuchtigkeit steuernde, auf der Saugseite der Ventilatoren angeordnete Klappensysteme (64, 65) vorgesehen sind, das mindestens einen Außenluftanschluß (8), Fortluftanschluß (11), Rückluftanschluß (7) und Zuluftanschluß (10) und zwei strömungsseitig nebeneinander angeordnete und gegenseitig abgeschottete Kammern (23, 24) aufweist, wobei die erste Kammer (23) mit dem Außenluftanschluß (8) und die zweite Kammer (24) mit dem Rückluftanschluß (7) und beide Kammern (23, 24) mit den Klappensystemen (64, 65) verbunden sind, die so angeordnet und steuerbar sind, daß das raumlufttechnische Gerät im reinen Umluftbetrieb mit wahlweiser Zuschaltung des Verdampfers (33), Kondensators (32) und/oder Wärmerohres (34), im reinen Außenluftbetrieb oder in einem Mischbetrieb mit einer Mischung der Außenluft und Rückluft betreibbar ist, und zwei Rückluftströme (RL) und/oder Außenluftströme (AL) unabhängig voneinander sowohl in den Zuluftstrom (ZL) als auch in den Fortluftstrom (FL) einspeisbar sind.

2. Raumlufttechnisches Gerät nach Anspruch 1, **dadurch gekennzeichnet**, daß ein zusätzliches, druckseitig angeordnetes Klappensystem (60) vorgesehen ist, mit dem der Rückluftanteil des Fortluftstromes steuerbar ist.

3. Raumlufttechnisches Gerät nach Anspruch 2, **dadurch gekennzeichnet**, daß das zusätzliche Klappensystem (60) druckabhängig arbeitet und beim Erreichen eines bestimmten Raumluftdruckes öffnet.

4. Raumlufttechnisches Geräte nach einem der vorstehenden Ansprüche 1 bis 3, **dadurch gekennzeichnet**, daß der Fortluftventilator (41) über dem Zuluftventilator (42) angeordnet ist.

5. Verfahren zum Betrieb eines raumlufttechnischen Gerätes nach einem der Ansprüche 2 bis 4, **dadurch gekennzeichnet**, daß die Fortluftmenge mit Hilfe des zusätzlichen, druckseitig angeordneten Klappensystems (60) gesteuert wird.

6. Verfahren nach Anspruch 5, **dadurch gekennzeichnet**, daß der Fortluftventilator (41) temperaturabhängig geschaltet wird, wobei bei Stillstand des Fortluftventilators (41) und Überdruck im zu klimatisierenden Raum die Rückluft (RL) über das zusätzliche Klappensystem (60) zur Fortluft (FL) geleitet wird.

## Claims

1. Ventilation apparatus having a housing (1), in which supply air fans (42) and exhaust air fans (41) for separate supply air and exhaust air streams, which fans can be driven independently of one another, a condenser (32), an evaporator (33) and/or a heat exchanger tube and also optionally one or more filters (31) and a plurality of flap systems (64, 65) for controlling the air streams dependent on the external air temperature and the desired room air temperature and humidity, which systems are arranged on the suction side of the fans, are provided, and which has at least one external air connection (8), exhaust air connection (11), return air connection (7) and supply air connection (10), and two chambers (23, 24) which are arranged adjacent to one another on the flow-side and are partitioned off from each other, the first chamber (23) being connected to the external air connection (8) and the second chamber (24) to the return air connection (7) and both chambers (23, 24) being connected to the flap systems (64, 65), which are arranged and controlled in such a manner that the ventilation apparatus can be operated in a purely circulating air operation with selective switching-on of the evaporator (33), condenser (32) and/or heat exchanger tube (34), in a purely external air operation or in a mixed operation with a mixture of the external air and return air, and two return air and/or external air streams (RL, AL) can be fed independently of each other both into the supply air stream (EL) and into the exhaust air stream (FL).

2. Ventilation apparatus according to Claim 1, characterised in that an additional flap system (60) located on the pressure side is provided, by means of which the proportion of return air of the exhaust air stream can be controlled.

3. Ventilation apparatus according to Claim 2, characterised in that the additional flap system (60) operates in pressure-dependent manner and opens when a given room air pressure is reached.

4. Ventilation apparatus according to one of the preceding Claims 1 to 3, characterised in that the exhaust air fan (41) is located above the supply air fan (42).

5. Method for operating a ventilation apparatus according to one of Claims 2 to 4, characterised in that the quantity of exhaust air is controlled with the aid of the additional flap system (60) which is located on the pressure side.

6. Method according to Claim 5, characterised in that the exhaust air fan (41) is controlled in temperature-dependent manner, with the return air (RL) being passed to the exhaust air (FL) through the additional flap system (60) when the exhaust air fan (41) is stopped and there is an overpressure in the room to be air-conditioned.

## Revendications

1. Appareil de conditionnement d'air d'un local, comportant un corps (1) dans lequel sont prévus des ventilateurs d'air refoulé (42) et des ventilateurs d'air d'échappement (41) pouvant être actionnés indépendamment l'un de l'autre destinés à des écoulements d'air refoulé et d'air d'échappement séparés, un condenseur (32), un évaporateur (33) et/ou un tube d'échange de chaleur (34) ainsi que facultativement un ou plusieurs filtres (31) et plusieurs systèmes de volets (64, 65) commandant les écoulements d'air en fonction de la température d'air externe et des température et humidité d'air de local souhaitées et agencés du côté d'aspiration des ventilateurs, et qui présente au moins un raccordement d'air externe (8), un raccordement d'air d'échappement (9), un raccordement d'air de recyclage (7) et un raccordement d'air refoulé (10), et deux chambres (23, 24) qui sont agencées l'une à côté de l'autre par rapport à l'écoulement et qui sont mutuellement cloisonnées, la première chambre (23) étant raccordée au raccordement d'air externe (8) et la seconde chambre (24) au raccordement d'air de recyclage (7) et les deux chambres (23, 24) aux systèmes de volets (69, 65), les systèmes de volets (64, 65) pouvant être agencés et commandés de façon que l'appareil de conditionnement d'air de local puisse être exploité en pur fonctionnement de circulation d'air avec mise en circuit facultative de l'évaporateur (33), du condenseur (32) et/ou du tube d'échange de chaleur (34), en pur fonctionnement à air externe ou en un fonctionnement à mélange avec un mélange d'air externe et d'air de recyclage et de façon que deux écoulements d'air de recyclage et/ou d'air externe (RL, AL) puissent être alimentés indépendamment l'un de l'autre tant dans l'écoulement d'air refoulé (ZL) qu'aussi dans l'écoulement d'air d'échappement (FL).

2. Appareil de conditionnement d'air d'un local suivant la revendication 1, caractérisé en ce qu'est prévu un système de volets supplémentaire (60) qui est agencé du côté de refoulement et par lequel peut être commandée la portion d'air de recyclage de l'écoulement d'air d'échappement.

3. Appareil de conditionnement d'air d'un local suivant la revendication 2, caractérisé en ce que le système de volets supplémentaire (60) agit en fonction de la pression et s'ouvre lorsqu'est atteinte une pression d'air de local déterminée.

4. Appareil de conditionnement d'air d'un local suivant l'une quelconque des revendications I à 4, caractérisé en ce que le ventilateur d'air d'échappement (41) est agencé au-dessus du ventilateur d'air refoulé (42).

5. Procédé d'exploitation d'un appareil de conditionnement d'air d'un local suivant l'une quelconque des revendications 2 à 4, caractérisé en ce que la quantité d'air d'échappement est commandée à l'aide du système de volets supplémentaire (60) agencé du côté du refoulement.

6. Procédé suivant la revendication 5, caractérisé en ce que le ventilateur d'air d'échappement (41) est enclenché en fonction de la température, l'air de recyclage (RL) étant guidé, en cas d'arrêt du ventilateur d'air d'échappement (Ai) et en cas de surpression dans le local à climatiser, jusqu'à l'air d'échappement (FL) par le système de volets supplémentaire (60).
